# EUROPÄISCHE PATENTSCHRIFT

(11) **EP 0 635 957 B1**
(45) Veröffentlichungstag und Bekanntmachung des Hinweises auf die Patenterteilung: **11.06.1997**
(21) Anmeldenummer: 94109934.3
(22) Anmeldetag: 28.06.1994
(51) Int. Cl.: H04L 9/32, G06F 1/00

(54) **Verfahren zur Sicherung des Datenverkehrs in komplexen Telekommunikations- und Datensystemen**
Method for securing data transmission in complex telecommunications and data systems
Procédé de sécurisation du trafic de données dans des systèmes complexes de télécommunication et de données

(30) Priorität: 16.07.1993 DE 4323869
(43) Veröffentlichungstag der Anmeldung: 25.01.1995
(73) Patentinhaber: Deutsche Telekom AG, 53113 Bonn (DE)
(72) Erfinder: Kowalski, Bernd, Dipl.-Ing., D-57072 Siegen (DE); Stolz, Helmut, Dipl.-Ing., D-57080 Siegen-Eisern (DE); Bothe, Heinz-Jürgen, Dipl.-Ing. TFAR, D-63329 Egelsbach (DE); Muhl, Werner, Dipl.-Ing. TFAR, D-64625 Bensheim (DE); Gladrow, Frank, Dipl.-Ing. TFAR, D-64390 Erzhausen (DE)
(74) Vertreter: Gornott, Dietmar, Dipl.-Ing.

(56) Entgegenhaltungen:
- US-A- 4 672 572
- US-A- 5 032 979

## Beschreibung

Die Erfindung betrifft ein Verfahren zur Sicherung des Datenverkehrs in komplexen Telekommunikations- und Daten-Systemen der im Oberbegriff des Patentanspruchs 1 näher definierten Art. Derartige Verfahren sind z.B. aus: ISO-IEC 10164 Security Management Accesscontrol Framework, ISO-IEC-FW-3 Security Framework for open Systems und aus US-A-4672572 bekannt.

Bei dem Betrieb von verteilten Telekommunikations- und Datenverarbeitungssystemen müssen eine Vielzahl von Systemkomponenten über Operatorplätze gesteuert und kontrolliert werden. Der Operatorzugriff erfolgt allgemein an Arbeitsstationen über Telekommunikationsverbindungen.

Alle technischen und organisatorischen Mittel, welche für den größtenteils automatischen Betrieb dieser Systemkomponenten erforderlich sind, werden unter dem Oberbegriff "Netzmanagement" (fachsprachlich: Networkmanagement) zusammengefaßt.

Je größer und komplexer die o.g. Systeme sind und je mehr Operatore Zugriff haben, desto größer wird die Gefahr, daß entweder unberechtigte Personen sich zwecks Mißbrauchs Zugang verschaffen oder daß berechtigte Personen vorsätzlich unzulässige Einstellungen vornehmen. Aus diesem Grund müssen geeignete Sicherheitsvorkehrungen das Netzmanagement vor solchen Mißbräuchen schützen. Dies geschieht in der Regel zum einen durch Zugangssicherungsverfahren über Paßwörter oder andere Identifikatoren, welche eine Identifikation des Operators beim Zugang vornehmen und daraufhin die im System für ihn voreingestellten Funktionen freigeben.

Mißbräuche werden meist erst im Nachhinein erkannt. Daher muß das System über eine Zugangsprotokollierung, fachsprachlich "Auditing" genannt, alle Zugänge und die pro Zugang vom Operator in Anspruch genommenen Funktionen aufzeichnen und zentral erfassen.

Bei Mißbrauchsverdacht werden die Auditing-Daten überprüft und geeignete Maßnahmen, fachsprachlich "Event Handling" genannt, eingeleitet. Ziel ist dabei erstens, den Verursacher zu ermitteln und zweitens, ggf. durch Neueinstellungen der manipulierten Systemfunktionen Fehleinstellungen rückgängig zu machen oder den im System entstandenen Schaden zu begrenzen.

### Mangel 1:

Alle Sicherheitsfunktionen eines Netzmanagementsystems werden häufig als "Sicherheitsmanagement", fachsprachlich "Security Management", bezeichnet. Sie sind integraler Bestandteil des Netzmanagement-Systems.

Dies ist insoweit vernünftig, als es sich um Sicherheitsvorkehrungen gegen unbeabsichtigte Fehlfunktionen und Ausfälle der Systemkomponenten mit dem Ziel der Gewährleistung einer optimalen Verfügbarkeit und Zuverlässigkeit der Netzkomponenten handelt.

Es jedoch nicht sinnvoll, Sicherheitsvorkehrungen gegen vorsätzliche Beeinflussung des Systems ebenfalls im Netzmanagement zu integrieren und deren organisatorische Betreuung der Administration des Netzmanagement-Systems zu überlassen.

Erfahrungsgemäß erfolgen nämlich die meisten vorsätzlichen Mißbräuche - unabhängig von deren ursächlicher Motivation - durch interne Angreifer. Diese Angreifer sind als Operator auch Bestandteil der Administration des Netzmanagements. Somit besteht im Hinblick auf die Erfassung und Verfolgung mißbräuchlicher Zugriffe bei herkömmlichen integralen Lösungen ein erheblicher Interessenkonflikt zwischen Verfolgern und Verursachern von Mißbräuchen.

### Mangel 2:

Bei den bekannten Systemen werden Benutzerberechtigungen (Operator-spezifische "Berechtigungsprofile") über sogenannte Berechtigungspaßworte vergeben. Wird das Benutzerprofil von der Administration des Netzmanagements geändert, so muß auch das Paßwort sowohl im System als auch in der Hand des Benutzers geändert werden. Die Aushändigung neuer Paßworte an die Benutzer (=Operatoren) bedeutet einen enormen administrativen Aufwand (Hauptmangel).

Der Operator hat große "Merkprobleme" beim Umgang mit mehreren Berechtigungspaßworten. Er muß sich zusätzlich auch noch sein Operator-Paßwort merken, mit dessen Hilfe das Netzmanagement-System seine Identität zu Beginn jedes Zuganges feststellt. Diese Paßwortvielfalt überfordert das Gedächtnis des Operators. Paßworte werden daher z.B. auf Zetteln notiert und verlieren dabei weitgehend ihre Schutzfunktion (Nebenmangel).

### Mangel 3:

Für eine wirkungsvolle Verarbeitung von Auditing-Daten müssen die Identität des Operators, das Datum, die Uhrzeit, die Dauer des Zugangs, sowie die Kennung der beanspruchten Funktion aufgezeichnet und für eine bestimmte Frist zentral gespeichert werden. Nur so lassen sich sicherheitsrelevante Ereignisse zurückverfolgen und der bzw. die Verantwortliche(n) zur Rechenschaft ziehen.

Hierbei tritt ein erhebliches Datenschutzproblem auf: Die aufgezeichneten Daten sind für den Regelbetrieb nicht erforderlich, sie werden nur für den Ausnahmefall eines (vermuteten) Mißbrauchs benötigt, sie müssen jedoch trotzdem für eine längere Frist aufbewahrt werden. Damit werden beim Auditing zwangsläufig auch alle ordnungsgemäßen Zugänge miterfaßt.

Die Betriebskräfte haben Anspruch auf eine datenschutzgerechte Speicherung und Verarbeitung der zwangsläufig personenbezogenen Auditing-Daten. Für den Systembetreiber stellt sich dieses Problem meist in dem Erfordernis der Zustimmung der Betriebs- bzw. Personalräte bei Einführung solcher Sicherheitsverfahren. Letztere werden insbesondere zu verhindern versuchen, daß der Systembetreiber bzw. Arbeitgeber die Auditing-Daten für eine mitarbeiterspezifische Leistungskontrolle oder andere personenbezogene statistische Untersuchungen zweckentfremdet.

Bei den bisher bekannten Systemlösungen lassen sich solche Datenschutzanforderungen nur durch Nicht-Aufzeichnung der Auditing-Daten realisieren, wodurch jedoch, mindestens in Bezug auf Operatoren, alle Sicherheitsfunktionen, welche die Verfolgung von Mißbräuchen zum Ziel haben (Auditing und Event Handling) außer Funktion gesetzt werden. Somit fehlt für solche Netz- und Sicherheitsmanagement-Systeme ein datenschutzgerechtes Auditing und Event Handling.

Die Aufgabe der Erfindung besteht demnach in einer derartigen Veränderung der Verfahrensweise, daß die aufgeführten Mängel der Sicherheitsfunktionen in den bekannten Netzmanagement-Systemen, vor allem die drei entscheidenden Mängel im Hinblick auf:
* Verbesserung der Sicherheit,
* Reduzierung der Kosten und eine
* datenschutzgerechte Arbeitsumgebung für Betriebskräfte behoben bzw. wenigstens weitgehend vermindert werden.

Diese Aufgabe wird auf die im Kennzeichen des Patentanspruchs 1 dargelegte Art gelöst.

Mit den im Kennzeichen des Patentanspruchs 2 beschriebenen Verfahrensschritten wird eine weitere Verbesserung im Sinne dieser Aufgabenstellung erreicht.

### Ausführungsbeispiel:

Im folgenden Ausführungsbeispiel wird die Veränderung der Verfahrensweise im Zusammenhang mit den Effekten in der Reihenfolge der zum Stand der Technik aufgeführten Mängel erklärt:

### zu Mangel 1:

Das Sicherheitsmanagement ist funktional aufgeteilt in:
a) ein Sicherheitsmanagement zur Gewährleistung der Verfügbarkeit und Zuverlässigkeit der Systemkomponenten und
b) ein Sicherheitsmanagement zur Verhinderung vorsätzlicher und mißbräuchlicher Eingriffe.
Davon verbleibt das Erstgenannte a) weiterhin integraler Bestandteil des Netzmanagements. Das Zweitgenannte b) wird sowohl technisch als auch administrativ als ein technisch eigenständiges Management-System konzipiert und betrieben. Das dort beschäftigte Personal hat somit eine eigenständige und ausschließlich sicherheitsspezifische Aufgabe, welche von der Interessenlage des Netz (-management-) betriebes vollständig getrennt und von dessen Zielsetzung unabhängig ist.

Besonders effektiv arbeitet ein solches Sicherheitsmanagement, wenn es, z.B. innerhalb großer Unternehmen, für verschiedene Telekommunikations- und Datenverarbeitungssysteme genutzt werden kann. Aufgrund seiner Aufgabenstellung kann es nämlich hinsichtlich seiner Schnittstellen und Datenbankstruktur systemunabhängig gestaltet werden.

### zu Mangel 2:

Mit dieser Aufteilung wird auch die Verwendung moderner Zugangssicherungsverfahren ermöglicht, die den Einsatz von Chipkarten erlauben. Chipkarten können beliebig lange und beliebig komplexe "Paßworte" ohne Merkprobleme beim Benutzer speichern. Sie können gegen Ausforschung mit Mitteln der Chipkarte gesichert werden.

Als vorteilhafte Weiterbildung wird vorgeschlagen, die Operator-Paßworte, also diejenigen, welche zur Identifizierung des Operators dienen, durch ein sogenanntes Zertifikat zu ersetzen. Dieses Zertifikat kann u.a. an Bestandteilen haben:
* Identität (Name) des Operators,
* Ausgabedatum und Gültigkeitsdauer,
* Ausgabestelle (Name),
* öffentlicher, personalisierter Schlüssel des Operators,
* die durch den geheimen Schlüssel der Ausgabestelle kryptogafisch gesicherte elektronische Unterschrift aller im Zertifikat enthaltenden Daten unter Verwendung eines public key Kryptoverfahrens.

Der Operator erhält nunmehr statt des Operator-Paßwortes eine Chipkarte mit Zertifikat (auslesbar) und seinem geheimen Operator-Schlüssel (nicht auslesbar). Letzterer wird für eine sitzungsindividuelle Authentikation (z.B. nach einem "challenge-response" Verfahren) des Operators gegenüber dem System verwendet.

Besonders wesentlicher Effekt des Verfahrens ist jedoch, daß das operatorspezifische Berechtigungsprofil, welches die von ihm beanspruchbaren Systemfunktionen festlegt, lediglich im System selbst eingestellt zu werden braucht. Die Ausgabe von Berechtigungspaßworten an den Operator entfällt völlig und damit auch der damit verbundene, administrativ sehr aufwendige Änderungsdienst.

Den Zertifikaten können damit von der Systemadministration unterschiedlichste Benutzerberechtigungen zugeordnet werden, ohne daß der Operator/Benutzer (neue) Berechtigungspaßworte erhalten oder sich merken muß. Zudem können die selben Zertifikate auch in unterschiedlichen Management-Systemen eingesetzt werden.

### zu Mangel 3:

Einer der Kernpunkte des Verfahrens ist die getrennte Aufzeichnung der Auditing-Daten. Bei jedem Zugang werden folgende Daten in getrennten sogenannten "Auditing-Trails" aufgezeichnet:
- Trail 1:: Operator-Identität (Name), Sitzungsnummer,
- Trail 2:: Funktions-Identität, Sitzungs-Zeitpunkt und Dauer, Sitzungsnummer.

Die Sitzungsnummer ist eine Zahl, welche die Zugangssitzung eindeutig kennzeichnet. Sie enthält keine weitergehende Information. Sie stellt die für die Identifizierung eines ganz bestimmten Zuganges erforderliche Korrelation zwischen Trail 1 und Trail 2 her.

Die Funktions-Identität kennzeichnet die in Anspruch genommene Systemfunktion.

Trail 1 und Trail 2 werden im Zuge des weiteren Auditing und Event Handling zentral auf getrennten Datenbanken verwaltet. Erst im Falle eines Mißbrauchsverdachts werden diese Informationen zusammengeführt, erst dann kann eine Operator-Identität mit einem bestimmten Zugangsvorgang in Verbindung gebracht werden.

Durch entsprechende administrative Regelungen kann zudem vorgegeben werden, daß im Mißbrauchsfalle nicht alle zur Verfügung stehenden Auditing-Daten geprüft werden, sondern daß zuvor eine Eingrenzung nach den Kriterien:
* Welcher Zeitraum kommt in Frage ?
* Welcher Personenkreis wird verdächtigt ?
* Welche Funktionen wurden mißbraucht ?
erfolgt.

Bei Systemen , in welchen bereits eine Trennung von Sicherheits- und Netzmanagement besteht, wird der Trail 1 vom systemunabhängigen Sicherheitsmanagement aufgezeichnet und verarbeitet, während der Trail 2 vom Netzmanagement verwaltet wird.

Verschiedene Varianten dieses Verfahrens sind denkbar. Das Kernprinzip geht jedoch immer von einer Anonymisierung der Auditing-Daten durch "Geheimhaltung" der Operator-Identität im Netzmanagement gegenüber einem funktionell und zeitlich durch die Aufzeichnung der Auditing-Daten bestimmten Systemzugang aus.

## Patentansprüche

1. Verfahren zur Sicherung des Datenverkehrs in komplexen Telekommunikations- und Datensystemen, bei dem die Operatoren differenzierte Zulassungsumfänge zu den Funktionen der Betriebs- und Sicherheits-Systeme besitzen und nachweisen und bei dem die Identität des Operators, der Zeitraum des Zugriffs und eine Kennung der beanspruchten Funktion für eine bestimmte Frist aufgezeichnet werden, **dadurch gekennzeichnet**, daß eine sich gegenseitig ausschließende Aufteilung der Zulassungsumfänge in
a) solche, die für das Betriebs-System und die der Gewährleistung der Verfügbarkeit und Zuverlässigkeit der Systemkomponenten dienenden Teile des Sicherheits-Systems gelten, einerseits und in
b) solche, die ausschließlich für Systemkomponenten des Sicherheits-Systems, die der Verhinderung und Identifizierung mißbräuchlicher Eingriffe und zugehöriger Operator-Daten dienen, gelten andererseits durchgeführt wird
und daß die Aufzeichnungen in zwei getrennten Datenbanken erfolgen, von denen die erste
aa) nur eine Funktions-Identität, den Zeitraum des Datenverkehrs und eine zugeordnete Sitzungs-Nummer enthält und ausschließlich mit dem bei a) angeführten Zulassungsumfang gelesen werden kann, und die zweite
bb) nur Operator-Identitäten in Verbindung mit zugeordneten Sitzungsnummern enthält und ausschließlich mit dem bei b) angeführten Zulassungsumfang gelesen werden kann.

2. Verfahren nach Anspruch 1, dadurch gekennzeichnet, daß für die Festlegung von Zulassungs-Umfang und Art der Operatoren hardwareseitig gegen Auslesen geschützte Chipkarten verwendet werden, die ein auslesbares Zertifikat, wenigstens für die Identität des Operators und dessen öffentlichen, personalisierten Schlüssel und Kennungen der Ausgabestelle und einen geheimen nicht auslesbaren Operatorschlüssel für das spezifische Berechtigungsprofil und die sitzungsindividuelle Authentikation des Operators gegenüber dem System enthalten.

## Claims

1. Method to secure data traffic in complex telecommunication and data systems, where operators possess and verify differentiated scopes of authorization to the functions of the operational and security systems and where the operator's identity, the time of access and an identifier of the function used are recorded, **characterized by the fact** that a mutually exclusive division of the authorization scopes is made into
a) those which apply to the operating system and the security components serving the purpose of ensuring availability and reliability, on the one hand, and
b) such ones applying exlusively to those components of the security system which are used to prevent and detect abusive interventions or manipulations and to identify the associated operator data, on the other hand,
and that recordings take place in two separate databases, the first of which contains
aa) only a functional identity, the time of data traffic and an allocated session number and can be read exclusively with the authorization scope referred to under a), and the second of which contains
bb) only operator identities in connection with allocated session numbers and is readable exclusively with the authorization scope referred to under b).

2. Method according to Claim 1, characterized by the fact that, in the definition of authorization scope and type of operators, use is made of chip cards being hardware-protected against readout, which contain a read-out capable certificate, at least for the operator's identity and his/her public, personalized key and identifiers of the issuing unit and a secret, read-out incapable operator key and the session-specific operator's authentication vis à vis the system.

## Revendications

1. Procédé pour sécuriser le trafic de données dans les systèmes complexes de télécommunications et de communication de données où les opérateurs possèdent et justifient des autorisations d'étendue différente concernant l'accès aux fonctions et où l'identité de l'opérateur, la durée de l'accès et l'identificateur de la fonction utilisée sont enregistrés pour une certaine durée, caractérisé en ce qu'on procède à une séparation des étendues d'autorisations s'excluant mutuellement, en:
a) celles qui s'appliquent au système d'exploitation et aux parties du système de sécurité destinées à assurer la disponibilité et la fiabilité des composants de système d'une part, et en
b) celles qui s'appliquent exclusivement aux composants de système de sécurité destinés à éviter et à identifier des interventions abusives et à identifier les données relatives aux opérateurs en question d'autre part,
et en ce que les enregistrements sont faits dans deux banques de données séparées, dont la première
aa) ne contient que l'identité de fonction, la durée de l'échange de données et le numéro de session attribué, et ne peut être lue que dans le cadre d'une autorisation dont l'étendue a été citée au point a), et dont la deuxième
bb) ne contient que des identités d'opérateurs en relation avec des numéros de session attribués et ne peut être lue que dans le cadre d'une autorisation dont l'étendue a été citée au point b).

2. Procédé conforme à la revendication 1, caractérisé en ce que, pour la détermination de l'étendue et du type de l'autorisation des opérateurs, on utilise dans les équipements informatiques des cartes à puce protégées contre la lecture, qui renferment un certificat pouvant être lu, du moins en ce qui concerne l'identité de l'opérateur et sa clé publique personnalisée et les identificateurs du service d'émission ainsi qu'une clé opérateur secrète (qui ne peut être extraite) pour le profil d'autorisation spécifique et, lors de chaque session individuelle, pour l'authentification de l'opérateur à l'égard du système.
